# EUROPEAN PATENT APPLICATION

(11) **EP 3 206 407 A1**
(43) Date of publication of application: **16.08.2017**
(21) Application number: 16775448.0
(22) Date of filing: 07.07.2016
(51) Int. Cl.: H04N 21/431, H04N 21/439, H04N 21/482, H04N 5/45, H04N 21/443, H04N 5/445

(54) **VIDEO PLAYING METHOD AND DEVICE**

(30) Priority: 31.12.2015 CN 201511026810
(71) Applicant: LE Holdings (Beijing) Co., Ltd., Beijing 100025 (CN); Le Shi Internet Information & Technology Corp. Beijing, Beijing 100025 (CN)
(72) Inventor: ZAN, Xiaofei, Beijing 100025 (CN)
(74) Representative: Epping - Hermann - Fischer
(86) International application number: PCT/CN2016/089259
(87) International publication number: WO 2017/113720

(57) **Abstract**

The present disclosure relates to a method and device for playing video. The method includes: generating a video window with a preset size on a display screen when a first video is played on the display screen and an instruction for synchronously playing is received; obtaining a second video when an instruction for synchronously playing the second video is received; and playing the second video in the video window. The solution provided by the present disclosure may play the second video in the video window at the same time when the first video is being played on the display screen, thus it can be ensured that a user may check whether the second video is interesting when he is watching the first video, thereby ensuring a continuity in user's watching of the first video. Therefore, the solution provided by the present disclosure may improve the user's view experience.

## Description

The present disclosure claims priority of the Chinese patent application No. 2015110268105, titled "METHOD AND DEVICE FOR PLAYING VIDEO", filed with the State Intellectual Property Office of China on December 31, 2015, the entire contents of which are incorporated herein by reference.

### TECHNICAL FIELD

The present disclosure relates to the field of communication technology, and more particularly, to a method and device for playing video.

### BACKGROUND

At present, when a user is watching videos by using a display screen of a terminal, if the user wants to see whether other videos are interesting, the video being played currently is required to be switched to the other videos, so that the other videos can be played on the display screen at the terminal.

Only when the video being played currently is switched to other videos can the user know whether the other videos are interesting. Therefore, the user has to change videos even if the user wants to continue watching the video being played currently, because there is no way to check whether other videos are interesting when he is watching the video being played currently. The existing technology for playing video thus reduces continuity in user's watching of videos, thereby deteriorating the user's view experience.

### SUMMARY

The present disclosure provides a method and device for playing video, wherein two videos are synchronously played, and thereby the user's view experience is improved.

According to a first aspect of the embodiments of the present disclosure, a method for playing video is provided, which includes:
generating a video window with a preset size on a display screen when a first video is played on the display screen and an instruction for synchronously playing is received;
obtaining a second video when an instruction for synchronously playing the second video is received; and
playing the second video in the video window.

Optionally, after the step of playing the second video in the video window, the method further includes:
playing the second video on the display screen when an instruction for switching videos between the display screen and the video window is received; and
playing the first video in the video window.

Optionally, after the step of playing the second video in the video window, the method further includes:
stopping playing the second video in the video window when an instruction for switching the second video in the video window to a third video is received;
obtaining the third video; and
playing the third video in the video window.

Optionally, after the step of playing the second video in the video window, the method further includes:
displaying an interface having a size input box when an instruction for changing the size of the video window is received; and
changing the size of the video window according to parameter values when the parameter values and a confirmation instruction inputted by a user are received by the size input box.

Optionally, the step of playing the second video in the video window comprises:
determining whether the first video is played in a mute state;
playing video images of the second video in the video window and outputting a sound of the second video when the first video is played in the mute state; and
playing video images of the second video in the video window and closing the sound of the second video when the first video is played in a non-mute state.

According to a second aspect of the embodiments of the present disclosure, a device for playing video is provided, which includes:
a generating module, configured to generate a video window with a preset size on a display screen when a first video is played on the display screen and an instruction for synchronously playing is received;
a first obtaining module, configured to obtain a second video when an instruction for synchronously playing the second video is received; and
a first playing module, configured to play the second video in the video window.

Optionally, the device further includes:
a second playing module, configured to play the second video on the display screen when an instruction for switching videos between the display screen and the video window is received; and
a third playing module, configured to play the first video in the video window.

Optionally, the device further includes:
a stop playing module, configured to stop playing the second video in the video window when an instruction for switching the second video in the video window to a third video is received;
a second obtaining module, configured to obtain the third video; and
a fourth playing module, configured to play the third video in the video window.

Optionally, the device further includes:
a display module, configured to display an interface having a size input box when an instruction for changing the size of the video window is received; and
a change module, configured to change the size of the video window according to parameter values when the parameter values and a confirmation instruction inputted by a user are received by the size input box.

Optionally, the first playing module includes:
a determining submodule, configured to determine whether the first video is played in a mute state;
a first triggering submodule, configured to play video images of the second video in the video window and output a sound of the second video when the first video is played in the mute state; and
a second triggering submodule, configured to play video images of the second video in the video window and close the sound of the second video when the first video is played in a non-mute state.

In a third aspect, a terminal is further provided, which includes the device for playing video of the second aspect aforementioned.

In a fourth aspect, the embodiments of the present disclosure further provide a computer storage medium, wherein the computer storage medium may store program, and when the program is executed, part or all of the steps of the respective modes in the method for playing video provided according to the first aspect of the present disclosure can be realized.

In a fifth aspect, a device for playing video is further provided, which includes:
a processor;
a memory for storing executable instructions of the processor;
wherein the processor is configured to:
   generate a video window with a preset size on a display screen when a first video is played on the display screen and an instruction for synchronously playing is received;
   obtain a second video when an instruction for synchronously playing the second video is received; and
   play the second video in the video window.

Compared with the prior art, the technical solution provided by the examples of the present disclosure has advantages and benefits as follows.

In the solution provided by the present disclosure, when a first video is played on a display screen, if a user wants to see whether other videos are interesting, he may input an instruction for synchronously playing, such that a video window with a preset size is generated on the display screen. When the user wants to see whether a second video is interesting, he may input an instruction for synchronously playing the second video. When an instruction for synchronously playing the second video is received, the second video can be played in the generated video window, such that the second video can further be played in the video window at the same time when the first video is being played on the display screen, thus it can be ensured that the user can check whether the second video is interesting when he is watching the first video, then the continuity in the user's watching of the first video can be ensured, and accordingly the solution provided by the present disclosure can improve the user's view experience.

It should be understood that, the above general description and the detailed description hereinafter are merely exemplary and explanatory, which are not used to limit the scope of the present disclosure.

### BRIEF DESCRIPTION OF THE DRAWINGS

The figures of the examples are briefly described as follows to illustrate the examples of the present disclosure or technical solutions in the prior art more clearly. Obviously, the figures described as below are merely some examples of the present disclosure, and one of ordinary skilled in the art can obtain other figures according to these figures without creative efforts.
Figure 1 is a flowchart of a method for playing video provided by an example of the present disclosure.
Figure 2 is a flowchart of another method for playing video provided by an example of the present disclosure.
Figure 3 is a flowchart of yet another method for playing video provided by an example of the present disclosure.
Figure 4 is flowchart of yet another method for playing video provided by an example of the present disclosure.
Figure 5 is flowchart of yet another method for playing video provided by an example of the present disclosure.
Figure 6 is a schematic diagram of a device for preview playing provided by an example of the present disclosure.
Figure 7 is a schematic diagram of another device for preview playing provided by an example of the present disclosure.
Figure 8 is a schematic diagram of yet another device for preview playing provided by an example of the present disclosure.
Figure 9 is a schematic diagram of yet another device for preview playing provided by an example of the present disclosure.
Figure 10 is a schematic diagram of yet another device for preview playing provided by an example of the present disclosure.

### DETAILED DESCRIPTION

The technical solution in the examples of the present disclosure will be explicitly and completely described in combination with figures herein as follows. Obviously, the examples as described are merely a part, rather than all of examples of the present disclosure. Based on the examples of the present disclosure, all the other examples obtained by one of ordinary skilled in the art without inventive efforts will fall into the scope of the present disclosure.

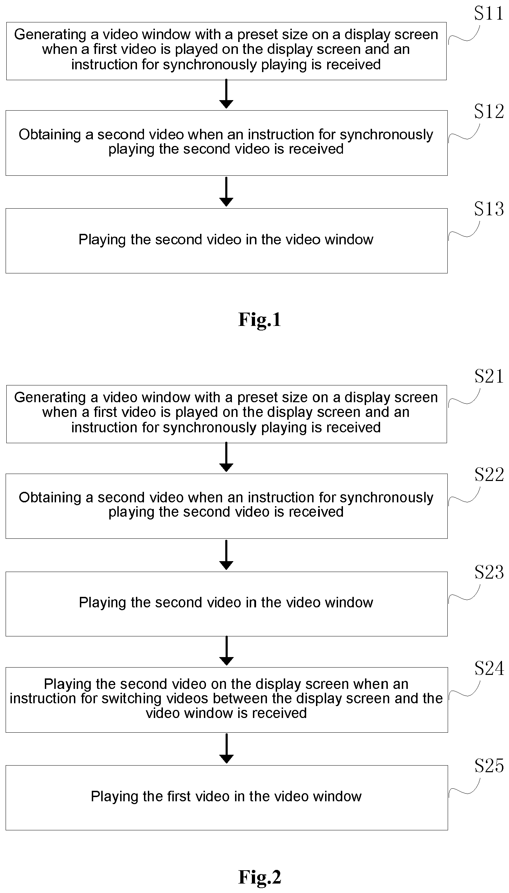

Figure 1 is a flowchart of a method for playing video provided by an example of the present disclosure. The method for playing video shown in figure 1 can be applied to a terminal. According to the method for playing video provided by the present disclosure, a second video can be played in a video window at the same time when a first video is being played on a display screen, thus it can be ensured that the user can check whether the second video is interesting when he is watching the first video, then the continuity in the user's watching of the first video can be ensured, and accordingly the solution provided by the present disclosure can improve the user's view experience. The method includes the following steps.

Step S11: a video window with a preset size is generated on a display screen when a first video is played on the display screen and an instruction for synchronously playing is received.

The method provided by the present disclosure is applied to a terminal capable of playing video, wherein the terminal may be a device such as smart TV, smart mobile phone, tablet computer, desktop computer or laptop and the like.

The first video, the second video, the third video up to the n^{th} video mentioned in the present disclosure are all videos, which are named in such way merely for distinguishing from different videos.

The video may be not only a video on demand, but also a live video. The video on demand means that the files of videos are stored in a server, wherein when some video on demand is required to be played at a terminal, the terminal will invoke the video on demand from the server. The video on demand may also be stored within the terminal in advance. The live video means a video being live played, wherein when some live video is required to be played at a terminal, the terminal will invoke a live video streaming of the live video from the server.

When a first video is played on a display screen of a terminal, if an instruction for synchronously playing inputted by the user is received, it means that the user wants to watch other videos at the same time when he is watching the first video. Therefore, a video window with a preset size is required to be generated on the display screen of the terminal.

A physical button can be arranged on the terminal, such that an instruction for synchronously playing is triggered when the user pushes the physical button. A virtual button can also be arranged within software for playing video in the terminal, such that an instruction for synchronously playing can be triggered when the virtual button is clicked.

The size of the video window can be preset. For example, supposing that the display screen of the terminal has a length of 50 cm and a width of 40 cm, the user may preset the length of the video window to be 15 cm, and the width thereof to be 15 cm. When the first video is played on the display screen of the terminal and an instruction for synchronously playing is received, a video window having a same length and width of 15cm is generated on the display screen.

Step S12: a second video is obtained when an instruction for synchronously playing the second video is received.

After the video window with a preset size is generated on the display screen of the terminal, a video menu can be shown at the terminal to facilitate the user to select. When the user selects a second video on video menu, the terminal will receives an instruction inputted by the user for synchronously playing the second video, thus the terminal will obtain the second video.

For example, supposing that a video A is played on the display screen of the terminal, if an instruction for synchronously playing inputted by the user is received, it means that the user wants to watch other videos at the same time when he is watching the video A, so a video window with a preset size is required to be generated on the display screen of the terminal. After that, a video menu will be shown on the display screen of the terminal. Supposing that videos that can be played on the video menu include a video B, a video C, a video D, and a video E, the user can click videos on the video menu when viewing them. Supposing that the user click the video D on the video menu, the terminal will receive an instruction for synchronously playing the video D, thus the terminal will obtain the video D from the server.

A physical button can be arranged on the terminal, such that an instruction for synchronously playing the second video is triggered when the user pushes the physical button. A virtual button can also be arranged within software for playing video in the terminal, such that an instruction for synchronously playing the second video can be triggered when the virtual button is clicked.

Step S13: the second video is played in the video window.

After obtained by the terminal, the second video can be played on the display screen of the terminal, so as to ensure the user to watch the second video at the same time when he is watching the first video.

In the example shown in figure 1, when a first video is played on a display screen, if the user wants to see whether other videos are interesting, he may input an instruction for synchronously playing, such that a video window with a preset size is generated on the display screen. When the user wants to see whether a second video is interesting, he may input an instruction for synchronously playing the second video. When an instruction for synchronously playing the second video is received, the second video can be played in the generated video window, such that the second video can also be played in the video window at the same time when the first video is being played on the display screen, thus it can be ensured that the user can check whether the second video is interesting when he is watching the first video. Therefore, continuity in the user's watching of the first video can be ensured, and accordingly the solution provided by the present disclosure can improve the user's view experience.

Figure 2 is a flowchart of another method for playing video provided by the example of the present disclosure. Figure 2 is an optional example based on figure 1, and in the example shown in figure 2, the part identical with the example shown in figure 1 may be referred to the description and explanation in the example shown in figure 1. The method shown in figure 2 includes the steps as follows.
Step S21: a video window with a preset size is generated on a display screen when a first video is played on the display screen and an instruction for synchronously playing is received.
Step S22: a second video is obtained when an instruction for synchronously playing the second video is received.
Step S23: the second video is played in the video window.
Step S24: the second video is played on the display screen when an instruction for switching videos between the display screen and the video window is received.
   After the second video is played in the video window, if the user prefers the second video, he may input an instruction for switching videos between the display screen and the video window to the terminal. When receiving the instruction for switching videos between the display screen and the video window inputted by the user, the terminal will play the second video in the display screen, and play the first video in the video window.
   If the user does not want to continue watching the first video in the video window, he may input an instruction for closing the video window to the terminal. When receiving the instruction for closing the video window inputted by the user, the terminal will close the video window and only play the second video on the display screen.
Step S25: the first video is played in the video window.

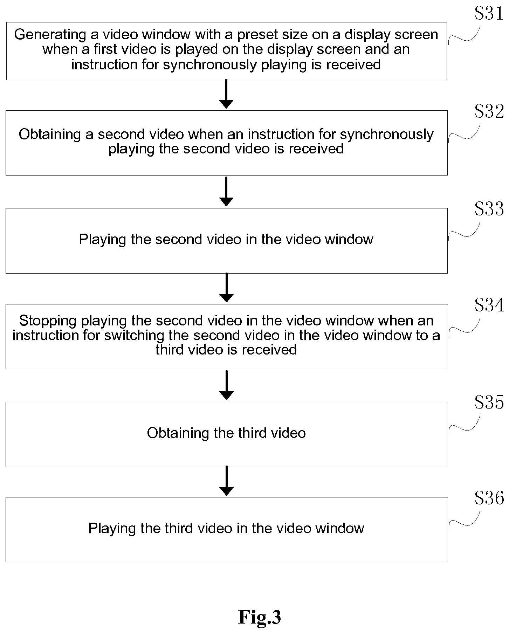

Figure 3 is a flowchart of yet another method for playing video provided by the example of the present disclosure. Figure 3 is an optional example based on figure 1, and in the example shown in figure 3, the part identical with the example shown in figure 1 may be referred to the description and explanation in the example shown in figure 1. The method shown in figure 3 includes the steps as follows.
Step S31: a video window with a preset size is generated on a display screen when a first video is played on the display screen and an instruction for synchronously playing is received.
Step S32: a second video is obtained when an instruction for synchronously playing the second video is received.
Step S33: the second video is played in the video window.
Step S34: the second video in the video window is stopped playing when an instruction for switching the second video in the video window to a third video is received.
   After the second video is played in the video window, if the user does not like the second video played in the video window, he may select other videos from a video playbill. When the user selects a third video from the video playbill, the terminal will receive an instruction for switching the second video in the video window to a third video, and stop playing the second video in the video window.
Step S35: the third video is obtained.
   After the second video in the video window is stopped playing, the terminal can obtain the third video. When the terminal obtains the third video, the terminal can play the third video in the video window, so as to meet the demand on switching videos in the video window by the user.
Step S36: the third video is played in the video window.

After the third video is played in the video window, if the user does not like the third video played in the video window, he may continue selecting other videos from the video playbill, and the terminal will also change to other videos followed by the above step, so as to ensure the user to select a satisfactory video.

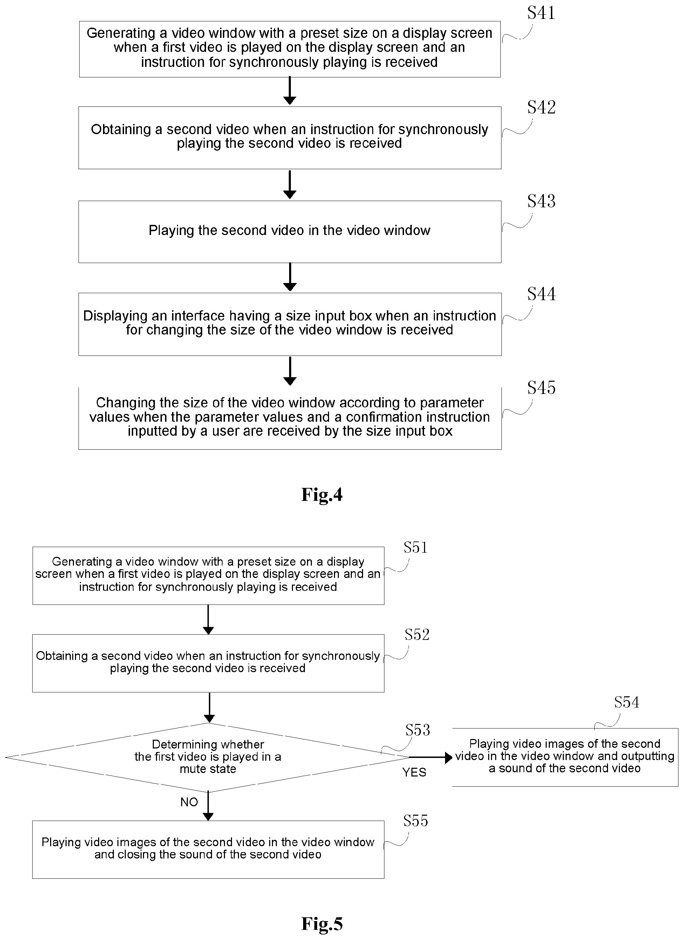

Figure 4 is flowchart of another yet method for playing video provided by the example of the present disclosure. Figure 4 is an optional example based on figure 1, and in the example shown in figure 4, the part identical with the example shown in figure 1 may be referred to the description and explanation in the example shown in figure 1. The method shown in figure 4 includes the following steps.
Step S41: a video window with a preset size is generated on a display screen when a first video is played on the display screen and an instruction for synchronously playing is received.
Step S42: a second video is obtained when an instruction for synchronously playing the second video is received.
Step S43: the second video is played in the video window.
Step S44: an interface having a size input box is displayed when an instruction for changing the size of the video window is received
   To ensure user's view comfort, the user may adjust the size of the video window on the terminal. When the terminal receives an instruction for changing the size of the video window, an interface having a size input box is displayed on the display screen of the terminal, so as to facilitate the user to enter a size that he thinks suitable.
Step S45: the size of the video window is changed according to parameter values when the parameter values and a confirmation instruction inputted by the user are received by the size input box.

The parameter values refer to the size of the video window. For example, supposing that the video window is in rectangle shape, the parameter values are the length and width of the video window. For another example, supposing that the video window is in circular shape, the parameter values are the radius of the video window.

After an interface having a size input box is displayed on the display screen of the terminal, the user may enter parameter values of the video window into the size input box. After that the parameter values of the video window are inputted, the user may click "confirm" button on the interface having the size input box, such that the size input box of the terminal can receive the parameter values and the confirmation instruction inputted by the user. When the size input box of the terminal receives the parameter values and the confirmation instruction inputted by the user, the terminal will change the size of the video window according to the parameter values.

For example, supposing that the display screen of the terminal has a length of 50 cm and a width of 40 cm, the user may preset the length of the video window to be 15 cm, and the width thereof to be 15 cm. When the first video is played on the display screen of the terminal and an instruction for synchronously playing is received, a video window having the same length and width of 15 cm is generated on the display screen. When receiving an instruction for synchronously playing a second video, the terminal will obtain the second video, and play the second video in the video window. At this time, the user may think the size of the video window is too small, and then inputs an instruction for changing the size of the video window to the terminal. When receiving the instruction for changing the size of the video window, the terminal will display an interface having a length input box and a width input box. Supposing that the user enters 25 cm into the length input box and 20 cm into the width input box, and then clicks the "confirm" button on the interface, the size input box of the terminal receives the parameter values and the confirmation instruction inputted by the user. The terminal will modify the length of the video window to 25 cm and the width of the video window to 20 cm. Finally, the terminal will show the video window having the modified length of 25 cm and width of 20 cm.

For another example, supposing that the display screen of the terminal has a length of 50 cm and a width of 40 cm, due to a circular shape of the video window, the user may preset the radius of the video window to be 10 cm. When the first video is played on the display screen of the terminal and an instruction for synchronously playing is received, the video window having a radius of 10 cm will be generated on the display screen. When receiving an instruction for synchronously playing the second video, the terminal will obtain the second video, and play the second video in the video window. At this time, the user may think the size of the video window is too large, and then inputs an instruction for changing the size of the video window to the terminal. When receiving instruction for changing the size of the video window, the terminal will display an interface having a radius input box. Supposing that the user enters 8 cm into the radius input box, and then clicks the "confirm" button on the interface, the size input box of the terminal receives the parameter values and the confirmation instruction inputted by the user, and will modify the radius of the video window to 8 cm. Finally, the terminal will show the video window having the modified radius of 8 cm.

Figure 5 is flowchart of yet another method for playing video provided by the example of the present disclosure. Figure 5 is an optional example based on figure 1, and in the example shown in figure 5, the part identical with the example shown in figure 1 may be referred to the description and explanation in the example shown in figure 1. The method shown in figure 5 includes the step as follows.
Step S51: a video window with a preset size is generated on a display screen when a first video is played on the display screen and an instruction for synchronously playing is received.
Step S52: a second video is obtained when an instruction for synchronously playing the second video is received.
Step S53: whether the first video is played in a mute state is determined. When the first video is played in a mute state, step S54 is triggered. When the first video is played in a non-mute state, step S55 is triggered.

After the terminal obtains the second video, to prevent the first video and the second video from making sound simultaneously, the terminal needs to determine whether the first video is played in a mute state.

When the terminal determines that the first video is played in a mute state, it means that the first video does not make a sound, then the terminal may play video images of the second video in the video window, and output a sound of the second video, such that the terminal currently plays video images of both the first video and the second video at the same time, but only outputs the sound of the second video.

When the terminal determines that the first video is played in a non-mute state, it means that the first video is making a sound, then the terminal may play video images of the second video in the video window, close the sound of the second video, such that the terminal currently plays video images of both the first video and the second video at the same time, but only outputs the sound of the first video.

To meet user's demand, the user may further arrange sounds of the first video and the second video flexibly within the terminal.

Step S54: video images of the second video are played in the video window and a sound of the second video is outputted.

Step S55: video images of the second video are played in the video window and the sound of the second video is closed.

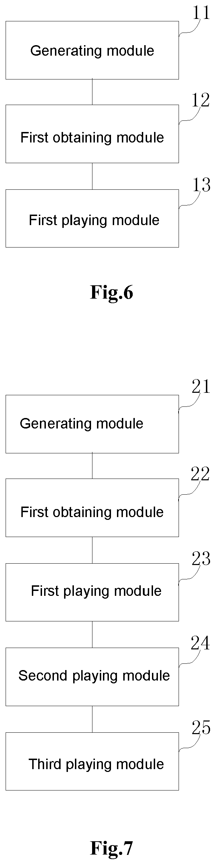

Figure 6 is a schematic diagram of a device for preview playing provided by the example of the present disclosure. Referring to figure 6, the device includes a generating module 11, a first obtaining module 12 and a first playing module 13.

The generating module 11 is configured to generate a video window with a preset size on a display screen when a first video is played on the display screen and an instruction for synchronously playing is received.

The first obtaining module 12 is configured to obtain the second video when an instruction for synchronously playing the second video is received.

The first playing module 13 is configured to play the second video in the video window.

Figure 7 is a schematic diagram of another device for preview playing provided by the example of the present disclosure. Referring to figure 7, the device includes a generating module 21, a first obtaining module 22, a first playing module 23, a second playing module 24 and a third playing module 25.

The generating module 21 is configured to generate a video window with a preset size on a display screen when a first video is played on the display screen and an instruction for synchronously playing is received.

The first obtaining module 22 is configured to obtain the second video when an instruction for synchronously playing the second video is received.

The first playing module 23 is configured to play the second video in the video window.

The second playing module 24 is configured to play the second video on the display screen when an instruction for switching videos between the display screen and the video window is received.

The third playing module 25 is configured to play the first video in the video window.

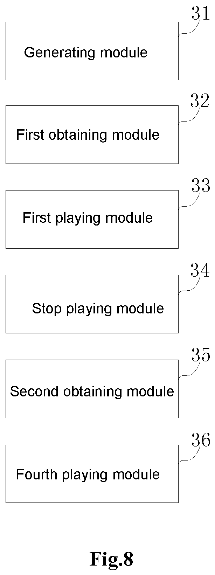

Figure 8 is a schematic diagram of yet another device for preview playing provided by the example of the present disclosure. Referring to figure 8, the device includes a generating module 31, a first obtaining module 32, a first playing module 33, a stop playing module 34, a second obtaining module 35 and a fourth playing module 36.

The generating module 31 is configured to generate a video window with a preset size on a display screen when a first video is played on the display screen and an instruction for synchronously playing is received.

The first obtaining module 32 is configured to obtain the second video when an instruction for synchronously playing the second video is received.

The first playing module 33 is configured to play the second video in the video window.

The stop playing module 34 is configured to stop playing the second video in the video window when an instruction for switching the second video in the video window to a third video is received.

The second obtaining module 35 is configured to obtain the third video.

The fourth playing module 36 is configured to play the third video in the video window.

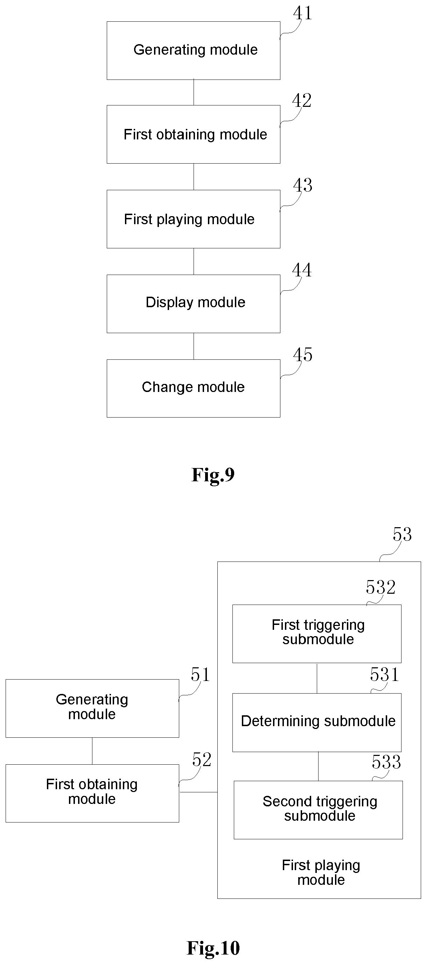

Figure 9 is a schematic diagram of yet another device for preview playing provided by the example of the present disclosure. Referring to figure 9, the device includes a generating module 41, a first obtaining module 42, a first playing module 43, a display module 44 and a change module 45.

The generating module 41 is configured to generate a video window with a preset size on a display screen when a first video is played on the display screen and an instruction for synchronously playing is received.

The first obtaining module 42 is configured to obtain the second video when an instruction for synchronously playing the second video is received.

The first playing module 43 is configured to play the second video in the video window.

The display module 44 is configured to display an interface having a size input box when an instruction for changing the size of the video window is received.

The change module 45 is configured to change the size of the video window according to parameter values when the parameter values and a confirmation instruction inputted by a user are received by the size input box.

Figure 10 is a schematic diagram of yet another device for preview playing provided by the example of the present disclosure. Referring to figure 10, the device includes a generating module 51, a first obtaining module 52 and a first playing module 53 including a determining submodule 531, a first triggering submodule 532 and a second triggering submodule 533.

The generating module 51 is configured to generate a video window with a preset size on a display screen when a first video is played on the display screen and an instruction for synchronously playing is received.

The first obtaining module 52 is configured to obtain the second video when an instruction for synchronously playing the second video is received.

The first playing module 53 is configured to play the second video in the video window.

The determining submodule 531 is configured to determine whether the first video is played in a mute state.

The first triggering submodule 532 is configured to play video images of the second video in the video window and output a sound of the second video when the first video is played in the mute state.

The second triggering submodule 533 is configured to play video images of the second video in the video window and close the sound of the second video when the first video is played in a non-mute state.

In regard to the devices in the above examples, the specific modes of operating the respective modules have been illustrated in the examples related to the methods, which will not be described again here in details.

The example of the present disclosure further provides a computer storage medium, wherein the computer storage medium may store program, and when the program is executed, part or all of steps in respective modes of the method for playing video provided by the examples in Figures 1-5 can be realized.

The example of the present disclosure further provides a device for playing video, wherein the device includes:
a processor;
a memory for storing executable instructions of the processor;
wherein the processor is configured to:
   generate a video window with a preset size on a display screen when a first video is played on the display screen and an instruction for synchronously playing is received;
   obtain a second video when an instruction for synchronously playing the second video is received; and
   play the second video in the video window.

The contents as described above are merely specific embodiments of the present disclosure, which are not used to limit the scope of the present disclosure. All the variations or substitutions readily envisaged by one of ordinary skilled in the art should fall into the scope of the present disclosure. Therefore, the scope of the present disclosure should be defined by the accompanying claims.

## Claims

1. A method for playing video, wherein the method comprises:
generating a video window with a preset size on a display screen when a first video is played on the display screen and an instruction for synchronously playing is received;
obtaining a second video when an instruction for synchronously playing the second video is received; and
playing the second video in the video window.

2. The method for playing video according to claim 1, wherein after the step of playing the second video in the video window, the method further comprises:
playing the second video on the display screen when an instruction for switching videos between the display screen and the video window is received; and
playing the first video in the video window.

3. The method for playing video according to claim 1, wherein after the step of playing the second video in the video window, the method further comprises:
stopping playing the second video in the video window when an instruction for switching the second video in the video window to a third video is received;
obtaining the third video; and
playing the third video in the video window.

4. The method for playing video according to claim 1, wherein after the step of playing the second video in the video window, the method further comprises:
displaying an interface having a size input box when an instruction for changing the size of the video window is received; and
changing the size of the video window according to parameter values when the parameter values and a confirmation instruction inputted by a user are received by the size input box.

5. The method for playing video according to claim 1, wherein the step of playing the second video in the video window comprises:
determining whether the first video is played in a mute state;
playing video images of the second video in the video window and outputting a sound of the second video when the first video is played in the mute state; and
playing video images of the second video in the video window and closing the sound of the second video when the first video is played in a non-mute state.

6. A device for playing video, wherein the device comprises:
a generating module, configured to generate a video window with a preset size on a display screen when a first video is played on the display screen and an instruction for synchronously playing is received;
a first obtaining module, configured to obtain a second video when an instruction for synchronously playing the second video is received; and
a first playing module, configured to play the second video in the video window.

7. The device for playing video according to claim 6, wherein the device further comprises:
a second playing module, configured to play the second video on the display screen when an instruction for switching videos between the display screen and the video window is received; and
a third playing module, configured to play the first video in the video window.

8. The device for playing video according to claim 6, wherein the device further comprises:
a stop playing module, configured to stop playing the second video in the video window when an instruction for switching the second video in the video window to a third video is received;
a second obtaining module, configured to obtain the third video; and
a fourth playing module, configured to play the third video in the video window.

9. The device for playing video according to claim 6, wherein the device further comprises:
a display module, configured to display an interface having a size input box when an instruction for changing the size of the video window is received; and
a change module, configured to change the size of the video window according to parameter values when the parameter values and a confirmation instruction inputted by a user are received by the size input box.

10. The device for playing video according to claim 6, wherein the first playing module comprises:
a determining submodule, configured to determine whether the first video is played in a mute state;
a first triggering submodule, configured to play video images of the second video in the video window and output a sound of the second video when the first video is played in the mute state; and
a second triggering submodule, configured to play video images of the second video in the video window and close the sound of the second video when the first video is played in a non-mute state.

11. A terminal, wherein the terminal comprises the device for playing video according to any one of claims 6-10.
